# EUROPÄISCHE PATENTSCHRIFT

(11) **EP 2 532 636 B1**
(45) Veröffentlichungstag und Bekanntmachung des Hinweises auf die Patenterteilung: **30.08.2017**
(21) Anmeldenummer: 12167998.9
(22) Anmeldetag: 15.05.2012
(51) Int. Cl.: C04B 40/06, C04B 24/12, C04B 26/02, C04B 26/06, C04B 28/06

(54) **Inhibitor, diesen enthaltende Harzmischung und deren Verwendung**
Inhibitor, resin mixture containing same and use of same
Inhibiteur, mélange de résine le contenant et leur utilisation

(30) Priorität: 09.06.2011 DE 102011077248
(43) Veröffentlichungstag der Anmeldung: 12.12.2012
(73) Patentinhaber: HILTI Aktiengesellschaft, 9494 Schaan (LI)
(72) Erfinder: Pfeil, Armin, 86916 Kaufering (DE)
(74) Vertreter: Hilti Aktiengesellschaft Corporate Intellectual Property

(56) Entgegenhaltungen:
- EP-A1- 2 327 731
- EP-A2- 2 314 556
- WO-A1-02/079293
- WO-A1-2006/131295
- WO-A2-02/00683

## Beschreibung

Gegenstand der vorliegenden Erfindung ist die Verwendung eines Inhibitors, insbesondere eines 3-Pyridinol- oder 5-Pyrimidinol-Derivates zur Einstellung der Reaktivität und der Gelzeit von Mörtelmassen auf Kunstharzbasis, insbesondere auf Basis radikalisch polymerisierbarer Verbindungen, eine diesen Inhibitor enthaltende Harzmischung sowie ein Zweikomponenten-Mörtelsystem mit einem Reaktionsharzmörtel (A Komponente), der die Harzmischung enthält, und einem Härter (B Komponente), der ein Härtungsmittel für die radikalisch polymerisierbare Verbindung enthält. Außerdem betrifft die vorliegende Erfindung die Verwendung der Harzmischung als organisches Bindemittel zur Verwendung im Baubereich.

Die Verwendung von Harzmischungen auf Basis radikalisch polymerisierbarer Verbindungen ist in den unterschiedlichsten Bereichen, unter anderem im Baubereich, seit langem bekannt. Im Bereich der Befestigungstechnik hat sich die Verwendung von Harzmischungen als organisches Bindemittel für Polymerbeton, durchgesetzt. Es handelt sich dabei insbesondere um deren Verwendung als Reaktionsharzmörtel in Zweikomponentensystemen für Dübelanwendungen, wobei der Reaktionsharzmörtel (A Komponente), die Harzmischung auf Basis radikalisch polymerisierbarer Verbindungen enthält, und der Härter (B Komponente), das Härtungsmittel enthält. Andere, übliche Bestandteile wie anorganische Zuschlagstoffe oder Farbstoffe können in der einen und/oder der anderen Komponente enthalten sein. Durch Vermischen der beiden Komponenten wird dann durch Radikalbildung die Reaktion in Gang gebracht und das organische Bindemittel zum Duromeren gehärtet.

Harzmischungen, die eine zur Beschleunigung der Polymerisationsreaktion fähige Verbindung, die dazu dient, die Bildung des Radikalstarters zu beschleunigen, enthalten, den sogenannten Beschleuniger, bedürfen des Zusatzes von zur Inhibierung der Polymerisationsreaktion fähigen Verbindungen, die dazu dienen, die Polymerisationsreaktion und damit ein unerwünschtes vorzeitiges Polymerisieren der radikalisch polymerisierbaren Verbindung während der Lagerung durch Abfangen gebildeter Radikale zu vermeiden, den Stabilisatoren. Als Stabilisatoren werden üblicherweise unterschiedliche Verbindungen verwendet, welche den radikalisch härtbaren Verbindungen in Mengen von 20 ppm bis 1000 ppm zugesetzt werden. Einige dieser Stabilisatoren lassen sich auch zur Einstellung der Gelzeit verwenden, das heisst zu einer gezielten Verzögerung des Starts der Polymerisation nach dem Vermischen der den Beschleuniger enthaltenden Harzmischung oder diese enthaltenden Reaktionsharzmörtel mit dem Härter. Allerdings müssen hierzu die Mengen der Stabilisatoren, insbesondere wenn Beschleuniger eingesetzt werden, in Abhängigkeit von der angestrebten Gelzeit deutlich auf bis zu 5000 ppm und mehr erhöht werden. In diesem Zusammenhang werden die Verbindungen als Inhibitoren bezeichnet, um sie funktionell von den Stabilisatoren abzugrenzen. Als Inhibitoren dieser Art werden üblicherweise phenolische Verbindungen eingesetzt, wie Hydrochinon, p-Methoxyphenol, 4-*tert*-Butylbrenzcatechin, 2,6-Di-*tert*-butyl-4-methylphenol oder 2,4-Dimethyl-6-*tert*-butylphenol, oder stabile Nitroxylradikale, wie 4-Hydroxy-2,2,6,6,-tetramethylpiperidin-1-oxyl (Tempol).

Die phenolischen Verbindungen, vor allem jene, welche sich aufgrund ihrer Reaktivität besonders gut als Inhibitor für die vorzeitige Polymerisation der angesprochenen Reaktionsharze eignen, wie z.B. Hydrochinon, Brenzkatechin, und deren alkylsubstituierten Derivate wie z.B. 4-*tert*-Butylbrenzcatechin, Methylhydrochinon und dergleichen besitzen jedoch den Nachteil, dass sie durch Luftsauerstoff deaktiviert werden, was während der Lagerung eines entsprechend inhibierten Systems zum schleichenden Verlust der inhibierenden Wirkung führt. Diese Deaktivierung verstärkt sich in Gegenwart alkalischer Medien, also beispielsweise alkalisch wirkenden Füllstoffen, wie Zement, was bei Mörtelmassen mit anorganischen Füllstoffen oder bei organisch-anorganischen Hybridmörteln problematisch werden kann. Die Deaktivierung des Inhibitors hat zur Folge, dass die Gelzeit auf unakzeptabel kurze Zeiten absinkt, die Harze bzw. Mörtelmassen somit einen großen Gelzeitdrift während der Lagerung vor dem Gebrauch zeigen.

Zur Verhinderung eines solchen Gelzeitdrifts schlägt die Anmeldung DE 195 31 649 A1 vor, den eigentlich hervorragend geeigneten Stabilisator 4-*tert*-Butylbrenzkatechin durch stabile Nitroxylradikale, wie Piperidinyl-N-oxyl oder Tetrahydropyrrol-N-oxyl zu ersetzen. Diese sind einigermaßen gelzeitstabil. Allerdings hat sich gezeigt, dass diese Inhibitoren zu einer überproportional starken Inhibierung der Polymerisationsreaktion bei tiefen Temperaturen führen und diese Inhibitoren enthaltende Reaktionsharze einer starken Oberflächeninhibierung durch Luftsauerstoff unterliegen, was zu einer ungenügenden Robustheit der Aushärtung führt. Ferner wird vermutet, dass Säurespuren, die zum Beispiel in den Vorstufen der radikalisch härtbaren, ethylenisch ungesättigten Verbindungen, wie polymeres Methylendiphenyldiisocyanat bei Urethan(meth)acrylat-Harzen, enthalten sein können, zur Disproportionierung der Nitroxylradikale und damit zu deren Inaktivierung führen.

Sterisch gehinderte Phenole, wie 2,6-Di-*tert*-butyl-4-methylphenol und 2,4-Dimethyl-6-*tert-*butylphenol verhalten sich zwar deutlich stabiler im Hinblick auf den Gelzeitdrift und führen auch zu einer geeigneten Inhibierung der Polymerisation bei Raumtemperatur. Jedoch ist bei tiefen Temperaturen die Qualität des ausgehärteten Harzes und damit die Auszugsfestigkeit eines mit Hilfe eines solchen inhibierten Reaktionsharzes gesetzten Dübels unbefriedigend. Weiterhin ist festzustellen, dass die Mehrzahl der zur Stabilisierung der Harze eingesetzten Verbindungen sich überhaupt nicht als Mittel zur Einstellung der Gelzeit eignen, also als Inhibitor, da sie in grösseren Mengen, wie sie zur Einstellung der Gelzeit erforderlich sind, als Retarder wirken, d.h. die Polymerisation und somit die mechanischen Endeigenschaften des Polymers empfindlich beeinträchtigen. Sie dienen daher im Wesentlichen zur Stabilisierung des Harzes, d.h. der Lagerstabilität.

Zur Lösung des Problems der mangelhaften Härtungsgeschwindigkeit und Durchhärtung bei tiefen Temperaturen schlägt die Anmeldung EP 1 935 860 A1 vor, den stark aktivierenden *tert*-Butylrest des 4-*tert*-Butylbrenzkatechins durch weniger stark aktivierende Reste zu ersetzen, wodurch eine ausreichende Inhibitorqualität bei signifikant geringerem Gelzeitdrift und ein hohes Leistungsniveau sowie eine hohe Robustheit der Zweikomponenten-Reaktionsharze auch bei tiefen Aushärtetemperaturen erzielt werden kann.

Das Brenzkatechin und dessen Derivate sind zwar sehr effiziente Inhibitoren zur Einstellung der Gelzeit, auch bei tiefen Temperaturen, neigen aber stark zur Autoxidation, was im alkalischen Milieu verstärkt wird, und somit wiederum zum Driften der Gelzeit.

Keiner dieser vorbekannten Lösungsansätze führt demzufolge zu einer befriedigenden Gelzeitstabilität des Reaktionsharzmörtels, vor allem in Gegenwart von Zement oder anderen alkalisch oder sauer reagierenden Substanzen als Füllstoffe oder im Falle erhöhter Restsäurezahlen des Reaktionsharzes, bei gleichzeitiger befriedigender Tieftemperaturhärtung.

Die der vorliegenden Erfindung zugrunde liegenden Aufgabe besteht also darin, Inhibitoren für die freie radikalische Polymerisation der eingangs angegebenen Reaktionsharzmörtel auf Basis von Kunstharzen, insbesondere radikalisch härtbarer Verbindungen, die unter anderem mit Zement oder anderen alkalisch oder sauer wirkenden Füllstoffen gefüllt sind und/oder die Verbindungen mit hoher Restsäurezahl enthalten, bereitzustellen, die säurestabil sind, die Stabilität der Gelzeit während der Lagerung sicherstellen und die die Reaktivität, Robustheit und Qualität der Aushärtung einer Mörtelmasse, wie sie beispielsweise mit den aus der DE 195 31 649 A1 und EP 1 935 860 A1 bekannten Inhibitoren erreicht werden kann, auch bei tiefen Temperaturen sicherstellen.

Es hat sich gezeigt, dass beim Austausch der bisher verwendeten Inhibitoren durch in para-Position zur Hydroxylgruppe substituierte Pyrimidinol- oder Pyridinol-Verbindungen eine befriedigende Inhibitorqualität bei signifikant geringerem Gelzeitdrift erreicht werden kann und dass unerwarteterweise auch ein hohes Leistungsniveau und eine hohe Robustheit von Mörtelmassen auch bei tiefen Aushärtetemperaturen erzielt werden kann.

Gegenstand der Erfindung ist daher die Verwendung eines Inhibitors gemäß Anspruch 1. Weitere Gegenstände der Erfindung ist eine die Inhibitormischung enthaltende Harzmischung gemäß Anspruch 6, ein diese enthaltender Reaktionsharzmörtel gemäß Anspruch 12, ein Zweikomponenten-Mörtelsystem gemäß Anspruch 13 sowie dessen Verwendung zur chemischen Befestigung gemäß Anspruch 17. Die entsprechenden Unteransprüche betreffen bevorzugte Ausführungsformen dieser Erfindungsgegenstände.

Im Sinne der Erfindung bedeuten:
*"Harzmischung,"* eine Mischung aus dem Reaktionsgemisch der Harzherstellung, enthaltend die radikalisch polymerisierbare Verbindung, gegebenenfalls einen Katalysator für die Herstellung der Verbindung und Reaktivverdünner, Beschleunigern sowie Stabilisatoren und ggf. weiteren Reaktivverdünnern; dieser Begriff wird gleichbedeutend mit dem Begriff *"organisches Bindemittel"* verwendet;
*"Reaktionsharzmörtel"* eine Mischung aus Harzmischung und anorganischen Zuschlagstoffen; hierfür wird gleichbedeutend der Begriff "A Komponente" verwendet;
*"Härtungsmittel"* Stoffe, welche die Polymerisation (das Härten) des Grundharzes bewirken;
*"Härter"* eine Mischung aus Härtungsmittel und anorganischen Zuschlagstoffen;
*"Beschleuniger"* eine zur Beschleunigung der Polymerisationsreaktion (Härtung) fähige Verbindung, die dazu dient, die Bildung des Radikalstarters zu beschleunigen;
*"Stabilisator"* eine zur Inhibierung der Polymerisationsreaktion (Härtung) fähige Verbindung, die dazu dient, die Polymerisationsreaktion und damit ein unerwünschtes vorzeitiges Polymerisieren der radikalisch polymerisierbaren Verbindung während der Lagerung zu vermeiden; diese Verbindungen werden üblicherweise in so geringen Mengen eingesetzt, dass die Gelzeit nicht beeinflusst wird;
*"Inhibitor"* ebenfalls eine zur Inhibierung der Polymerisationsreaktion (Härtung) fähige Verbindung, die dazu dient, die Polymerisationsreaktion unmittelbar nach der Zugabe des Härtungsmittels zu verzögern; diese Verbindungen werden üblicherweise in solchen Mengen eingesetzt, dass die Gelzeit beeinflusst wird;
*"Reaktivverdünner"* flüssige oder niedrigviskose radikalisch polymerisierbare Verbindungen, welche die Harzmischung verdünnen und dadurch die zu deren Applikation notwendige Viskosität verleihen, zur Reaktion mit dem Grundharz befähigte funktionelle Gruppen enthalten und bei der Polymerisation (Härtung) zum überwiegenden Teil Bestandteil des gehärteten Masse (Mörtel) werden;
*"Mörtelmasse"* bezeichnet die Formulierung, die durch Mischen des Reaktionsharzmörtels mit dem Härter, der das Härtungsmittel enthält, erhalten wird, und als solche direkt zur chemischen Befestigung verwendet werden kann;
*"Zweikomponenten-Mörtelsystem"* wird ein System bezeichnet, dass eine A Komponente, den Reaktionsharzmörtel, und eine B Komponente, den Härter, umfasst, wobei die beiden Komponenten reaktionsinhibierend getrennt gelagert sind, so dass eine Härtung des Reaktionsharzmörtels erst nach deren Mischen erfolgt.

Gegenstand der Erfindung ist die Verwendung eines Inhibitors der allgemeinen Formel (I) oder (II) 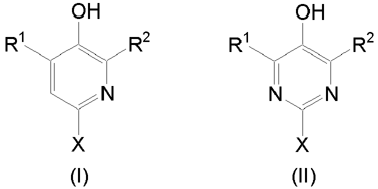 in denen R¹ und R² jeweils unabhängig voneinander Wasserstoff oder eine verzweigte oder unverzweigte C₁-C₂₀-Alkylgruppe ist und X eine beliebige elektronenschiebende Gruppe ist, zur Einstellung der Reaktivität und der Gelzeit von Harzmischungen und/oder Reaktionsharzmörteln auf Basis von radikalisch polymerisierbaren Verbindungen.

Die elektronenschiebende Gruppe X kann jede Gruppe sein, die entweder direkt oder über Konjugation oder Hyperkonjugation Elektronendichte in den aromatischen Ring schieben und damit die OH-Gruppe für den Wasserstofftransfer auf freie Radikale, bevorzugt auf Alkylradikale, wie sie bei der radikalischen Polymerisation auftreten, aktivieren kann und gleichzeitig zur Löslichkeit der 5-Pyrimidinol- bzw. 3-Pyridiniol-Verbindungen beiträgt, da sich diese aufgrund ihrer hohen Polarität unter Umständen nicht ausreichend in Methacrylatharzen, welche eine mittlere bis geringe Polarität aufweisen, lösen, wobei Alkoxy-, Amino-, N-Alkylamino- oder N,N-Dialkylamino-Gruppen bevorzugt sind. Insbesondere stellt X -OR³ , -NH₂, -NHR³ oder -NR³₂ dar, wobei R³ eine unverzweigte oder verzweigte C₁-C₂₀-Alkylgruppe oder eine C₂-C₄-Polyalkylenoxid-Kette, wie Polyethylenoxid oder Polypropylenoxid, darstellt, bevorzugt eine unverzweigte oder verzweigte C₁-C₈-Alkylgruppe, besonders bevorzugt Methyl oder n-Octyl.

Die Reste R¹ und R² in Formel (I) und (II) sind unabhängig voneinander Wasserstoff, eine verzweigte oder unverzweigte C₁-C₈-Alkylgruppe, bevorzugt Methyl, *iso*-Propyl oder *tert-*Butyl.

Besonders bevorzugt ist als Verbindung der Formel (I) und (II) eine Verbindung der Formeln 1, 2 oder 3:

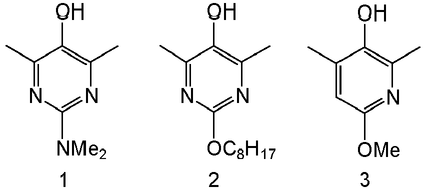

Ein weiterer Gegenstand der Erfindung ist eine Harzmischung umfassend mindestens eine radikalisch polymerisierbare Verbindung, gegebenenfalls mindestens einen Reaktivverdünner und ein Mittel zur Einstellung der Reaktivität und der Gelzeit, wobei das Mittel zur Einstellung der Reaktivität und der Gelzeit eine Verbindung der allgemeinen Formel (I) oder (II) ist 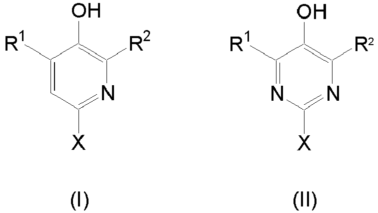 wie sie oben beschrieben sind. Bezüglich der Verbindung der Formeln (I) und (II) wird auf die obigen Ausführungen verwiesen.

Das Mittel für die Einstellung der Reaktivität und der Gelzeit, der Inhibitor, wird vorzugsweise in einer Menge von 100 ppm bis 2,0 Gew.-%, bevorzugt von 500 ppm bis 1,5 Gew.-% und weiter bevorzugt von 1000 ppm bis 1 Gew.- %, bezogen auf die radikalisch polymerisierbare Verbindung, eingesetzt.

Als radikalisch polymerisierbare Verbindungen sind erfindungsgemäß ethylenisch ungesättigte Verbindungen, cyclische Monomere, Verbindungen mit Kohlenstoff-Kohlenstoff-Dreifachbindungen und Thiol-Yne/Ene-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1 und WO 10/108939 A1 beschrieben sind. Vinylesterharze sind dabei aufgrund ihrer hydrolytischen Beständigkeit und ausgezeichneten mechanischen Eigenschaften am stärksten bevorzugt.

Beispiele geeigneter ungesättiger Polyester, die in der erfindungsgemäßen Harzmischung verwendet werden können, werden in folgende Kategorien eingeteilt, wie sie durch M. Malik et al. in J. M. S. - Rev. Macromol. Chem. Phys., C40(2 and 3), p.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diese Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion eines Diacids, z.B. Maleinsäure, mit Dicyclopentadien, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharze hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigten Gruppen aufweisen, werden zum Beispiel durch Umsetzung von Epoxid-Oligomeren oder -Polymeren (z.B. Bisphenol A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomeren oder -Polymeren mit Methacrylsäure oder Methacrylamid, bevorzugt mit Methacrylsäure, erhalten werden. Beispiele solcher Verbindungen sind aus den Anmeldungen US 3297745 A, US 3772404 A, US 4618658 A, GB 2217722 A1, DE 3744390 A1 und DE 4131457 A1 bekannt.

In diesem Zusammenhang wird auf die Anmeldung US2011071234 verwiesen, deren Inhalt hiermit in diese Anmeldung aufgenommen wird.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

Als Vinylesterharz besonders geeignet sind ethoxyliertes Bisphenol-A-di(meth)acrylat mit einem Ethoxylierungsgrad von 2 bis 10, vorzugsweise von 2 bis 4, difunktionelle, trifunktionelle oder höherfunktionelle Urethan(meth)acrylat-Oligomere oder Mischungen dieser härtbaren Bestandteile.

Ganz besonders geeignet sind die bekannten Reaktionsprodukte aus Di- oder Polyisocyanaten und Hydroxyalkylmethylacrylaten, wie sie beispielsweise in der DE 2 312 559 A1 beschrieben sind, Addukte aus (Di)Isocyanaten und 2,2-Propanbis-[3-(4-phenoxy)-1,2-hydroxypropan-1-methacrylat] nach der US-PS 3 629 187 sowie die Addukte aus Isocyanaten und Methacryloylalkylethern, -alkoxybenzolen bzw. -alkoxycycloalkanen, wie sie in der EP 44352 A1 beschrieben sind. In diesem Zusammenhang wird auf die DE 2312559 A1, DE 19902685 A1, EP 0684906 A1, DE 4111828 A1 und DE 19961342 A1 verwiesen. Selbstverständlich können auch Gemische aus geeigneten Monomeren verwendet werden.

All diese Harze, die erfindungsgemäß verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind, wie sie beispielsweise in der WO 2010/108939 A1 (Itaconsäureester) beschrieben sind.

Die Harzmischung enthält 10 bis 90 Gew.-%, vorzugsweise 30 bis 70 Gew.-%, bezogen auf die Harzmischung, mindestens einer radikalisch polymerisierbaren Verbindung.

Die Harzmischung kann sofern erforderlich Lösungsmittel enthalten. Die Lösungsmittel können dem Reaktionssystem gegenüber inert sein oder während der Härtung an der Polymerisation teilnehmen, sogenannte Reaktivverdünner.

In einer bevorzugten Ausführungsform der Erfindung enthält die Harzmischung weitere niederviskose, radikalisch polymerisierbare Verbindungen als Reaktivverdünner, um die Viskosität der als Harz fungierenden radikalisch polymerisierbaren Verbindung anzupassen, falls erforderlich. Die Reaktivverdünner können in einer Menge von 90 bis 10 Gew.-%, vorzugsweise 70 bis 30 Gew.-%, bezogen auf die Harzmischung, zugegeben werden.

Geeignete Reaktivverdünner sind in den Anmeldungen EP 1 935 860 A1 und DE 195 31 649 A1 beschrieben. Vorzugsweise enthält die Harzmischung als Reaktivverdünner einen (Meth)acrylsäureester, wobei besonders bevorzugt (Meth)acrylsäureester aus der Gruppe ausgewählt werden, bestehend aus Hydroxypropyl(meth)acrylat, Propandiol-1,3-di(meth)acrylat, Butandiol-1,2-di(meth)acrylat, Trimethylolpropantri(meth)acrylat, 2-Ethylhexyl(meth)acrylat, Phenylethyl-(meth)acrylat, Tetrahydrofurfuryl(meth)acrylat, Ethyltriglykol(meth)acrylat, N,N-Dimethylaminoethyl(meth)acrylat, N,N-Dimethylaminomethyl(meth)acrylat, Butandiol-1,4-di(meth)acrylat, Acetoacetoxyethyl(meth)acrylat, Ethandiol-1,2-di(meth)acrylat, Isobornyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1,0.^{2.6}-decan, 3-(Meth)cyclopentadienyl(meth)acrylat, Isobornyl(meth)acrylat und Decalyl-2-(meth)acrylat.

Grundsätzlich können auch andere übliche radikalisch polymerisierbaren Verbindungen, allein oder im Gemisch mit den (Meth)acrylsäureestern, eingesetzt werden, z. B. Styrol, α-Methylstyrol, alkylierte Styrole, wie *tert*-Butylstyrol, Divinylbenzol und Allylverbindungen.

Die zur Bezeichnung der radikalisch polymerisierbaren Verbindungen verwendete Nomenklatur "(Meth)acryl.../...(methy)acryl..." bedeutet, dass mit der dieser Bezeichnung sowohl die "Methacryl.../...methacryl..."- als auch die "Acryl.../...acryl..."-Verbindungen umfasst sein sollen.

Gemäß einer bevorzugten Ausführungsform der Erfindung liegt die Harzmischung in vorbeschleunigter Form vor, das heisst sie enthält einen Beschleuniger für das Härtungsmittel. Bevorzugte Beschleuniger für das Härtungsmittel sind aromatische Amine und/oder Salze von Kupfer, Kobalt, Mangan, Eisen, Zinn, Vanadium oder Cer. Besonderes vorteilhaft haben sich als Beschleuniger N,N-Dimethylanilin, N,N-Diethylanilin, N,N-Di-isopropanol-p-toluidin, N,N-Diisopropyliden-p-toluidin, N,N-Dimethyl-p-toluidin, N,N-Diethylol-p-toluidin, N,N-Diisopropylol-m-toluidin, N,N-Bis(2-hydroxyethyl)-toluidin, N,N-Bis(2-hydroxyethyl)-xylidin, N-Methyl-N-hydroxyethyl-p-toluidin, Cobaltoctoat, Cobaltnaphthenat, Vanadium(IV)-acetylacetonat und Vanadium(V)-acetylacetonat erwiesen.

Der Beschleuniger ist erfindungsgemäß in einer Menge von 100 ppm bis 5 Gew.-%, vorzugsweise 1000 ppm bis 2,5 Gew.- %, bezogen auf die Harzmischung, enthalten.

Ein weiterer Gegenstand der Erfindung ist ein Reaktionsharzmörtel, der neben der eben beschriebenen Harzmischung, dem organischen Bindemittel, anorganische Zuschlagstoffe enthält, wie Füllstoffe und/oder weitere Zusätze.

Der Anteil der Harzmischung in dem Reaktionsharzmörtel beträgt bevorzugt 10 bis 60 Gew.-%, stärker bevorzugt 20 bis 30 Gew.-%, bezogen auf den Reaktionsharzmörtel.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Russ, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Füllstoffe liegen in der jeweiligen Komponente vorzugsweise in einer Menge von bis zu 90, insbesondere 3 bis 85, vor allem 5 bis 70 Gew.-% vorhanden. Bevorzugt und deutlicher verstärkend wirken sich jedoch die globulären, inerten Stoffe (Kugelform) aus.

Weitere denkbare Zusätze sind ferner Thixotropiermittel, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Auch nicht reaktive Verdünnungsmittel (Lösungsmittel) können, vorzugsweise in einer Menge bis zu 30 Gew.-%, bezogen auf die jeweilige Komponente (Reaktionsharzmörtel, Härter), beispielsweise von 1 bis 20 Gew.-%, vorliegen, wie Niederalkylketone, z. B. Aceton, Diniederalkyl-niederalkanoylamide, wie Dimethylacetamid, Niederalkylbenzole, wie Xylole oder Toluol, Phthalsäureester oder Paraffine, oder Wasser.

Ein weiterer Gegenstand der Erfindung ist ein Zweikomponenten-Mörtelsystem umfassend als A Komponente den eben beschriebenen Reaktionsharzmörtel und als B Komponente einen Härter, der insbesondere räumlich und damit reaktionsinhibierend getrennt vom Reaktionsharzmörtel gelagert ist. Bevorzugt enthält der Härter als Härtungsmittel ein Peroxid. Alle dem Fachmann bekannten Peroxide, die zum Härten von ungesättigten Polyesterharzen und Vinylesterharzen verwendet werden, können eingesetzt werden. Derartige Peroxide umfassen organische und anorganische Peroxide, entweder flüssig oder fest, wobei auch Wasserstoffperoxid verwendet werden kann. Beispiele geeigneter Peroxide sind Peroxycarbonate der Formel -OC(O)O-, Peroxyester der Formel -C(O)OO-, Diacylperoxide der Formel -C(O)OOC(O)-, Dialkylperoxide der Formel -OO- und dergleichen.

Diese können als Oligomer oder Polymer vorliegen. Eine umfassende Reihe an Beispielen für geeignete Peroxide ist zum Beispiel in den Anmeldungen US 2002/0091214-A1, Absatz [0018], WO 02051879 A1 und EP 1 221 449 A1 beschrieben.

Bevorzugt sind die Peroxide aus der Gruppe der organischen Peroxide ausgewählt. Geeignete organische Peroxide sind: tertiäre Alkylhydroperoxide, wie *tert*-Butylhydroperoxid, und andere Hydroperoxide, wie Cumenhydroperoxid, Peroxyester oder Persäuren, wie *tert-*Butylperester, Benzoylperoxid, Peracetate und Perbenzoate, Laurylperoxid, einschließlich (Di)peroxyesters, Perether, wie Peroxydiethylether, Perketone, wie Methylethylketoneperoxid. Die als Härter verwendeten organischen Peroxide sind oft tertiäre Perester oder tertiäre Hydroperoxide, d.h. Peroxidverbindungen mit tertiären Kohlenstoffatomen, die direkt an eine -O-O-acyl- oder -OOH-Gruppe gebunden ist. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. Bevorzugt wird zum Härten Benzoylperoxid (BPO) verwendet.

Die Härtungsmittel werden zweckmässigerweise durch Wasser, verflüssigend wirkende, nichtreaktive Verdünnungsmittel, wie beispielsweise Phthalate (WO 0205187 A1), oder auch inerte Füllstoffe phlegmatisiert, wobei Quarzsande und Tonerden bevorzugt sind.

Die Peroxide werden erfindungsgemäß in Mengen von 0,1 bis 10 Gew.-%, vorzugsweise von 1 bis 6 Gew.- %, bezogen auf die Harzmischung, eingesetzt.

Bevorzugt enthält der Härter des Zweikomponenten-Mörtelsystems ferner anorganische Zuschlagstoffe, wobei die Zuschlagstoffe dieselben sind, wie sie dem Reaktionsharzmörtel zugegeben werden können.

Bei einer besonders bevorzugten Ausführungsform des Zweikomponenten-Mörtelsystems enthält die A Komponente neben dem Reaktionsharzmörtel zusätzlich noch eine hydraulisch abbindende oder polykondensierbare anorganische Verbindung und die B Komponente neben dem Härtungsmittel noch Wasser. Derartige Mörtelmassen sind ausführlich in DE 42 31 161 A1 beschrieben. Dabei enthält die A Komponente vorzugsweise als hydraulisch abbindende oder polykondensierbare anorganische Verbindung Zement, beispielsweise Portlandzement oder Aluminatzement, wobei eisenoxidfreie oder eisenoxidarme Zemente besonders bevorzugt sind. Als hydraulisch abbindende anorganische Verbindung kann auch Gips als solcher oder in Mischung mit dem Zement eingesetzt werden. Als polykondensierbare anorganische Verbindung können auch silikatische, polykondensierbare Verbindungen, insbesondere lösliches, gelöstes und/oder amorphes Siliziumdioxid enthaltende Stoffe verwendet werden.

Das Zweikomponenten-Mörtelsystem umfasst bevorzugt die A Komponente und die B Komponente reaktionsinhibierend getrennt in unterschiedlichen Behältern, beispielsweise einer Mehrkammer-Vorrichtung, wie eine Mehrkammer-Patrone und/oder -Kartusche, aus welchen Behältern die beiden Komponenten durch Einwirkung mechanischer Presskräfte oder unter Einwirkung eines Gasdruckes ausgepresst und vermischt werden. Eine weitere Möglichkeit besteht darin, das Zweikomponenten-Mörtelsystem als Zweikomponenten-Kapseln zu konfektionieren, die in das Bohrloch eingeführt werden und durch schlagdrehendes Setzen des Befestigungselements zerstört werden unter gleichzeitiger Durchmischung der beiden Komponenten der Mörtelmasse. Vorzugsweise wendet man ein Patronensystem oder ein Injektionssystem an, bei dem die beiden Komponenten aus den getrennten Behältern ausgepresst und durch einen statischen Mischer geführt werden, in dem sie homogen vermischt und dann über eine Düse vorzugsweise direkt in das Bohrloch ausgetragen werden.

Die erfindungsgemäße Harzmischung, der Reaktionsharzmörtel sowie das Zweikomponenten-Mörtelsystem finden vor allem im Baubereich Verwendung, etwa zur Instandsetzung von Beton, als Polymerbeton, als Beschichtungsmasse auf Kunstharzbasis oder als kalthärtende Straßenmarkierung. Besonders eigenen sie sich zur chemischen Befestigung von Verankerungselementen, wie Ankern, Bewehrungseisen, Schrauben und der gleichen, in Bohrlöchern Verwendung, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein und dergleichen.

Im Gegensatz zu Harzmischungen und Reaktionsharzmörteln, die mit phenolischen Inhibitoren inhibiert werden, weisen die erfindungsgemäßen Systeme auch nach längerer Lagerung eine stabile Gelzeit auf, d.h. dass die Gelzeit auch bei späterem Gebrauch nicht auf unakzeptabel kurze Werte driftet. Im Vergleich zu Harzmischungen und Reaktionsharzmörteln, welche mit stabilen Nitroxylradikalen inhibiert werden, weisen die erfindungsgemäßen Systeme auch bei tiefen Temperaturen eine gute Durchhärtung auf.

Die folgenden Beispiele dienen der weiteren Erläuterung der Erfindung.

### AUSFÜHRUNGSBEISPIELE

Die Gelzeiten und die Lastwerte der gemäß den Beispielen und Vergleichsbeispielen hergestellten Mörtelmassen werden verglichen sowie die Lagerstabilität von erfindungsgemäßen Reaktionsharzmörteln untersucht.

### Beispiele 1

### A Komponente

Zur Herstellung des Reaktionsharzmörtels werden zunächst unter Erwärmen 1,786 g Diisopropyl-p-Toluidin in 160 g Methacrylatharz gelöst. Zu der Lösung werden anschließend 0,349 g Inhibitor, 2-(Dimethylamino)-4,6-dimethylpyrimidin-5-ol (1), gegeben und gerührt, bis eine homogene Lösung erhalten wird. Anschließend werden unter Vakuum 12,0 g pyrogene Kieselsäure (Aerosil® R202; Evonik Degussa GmbH), 80 g Aluminatzement und 144,0 g Quarzsand mit einer mittleren Teilchengröße von 0,4 mm mit einem Dissolver in der Harzlösung dispergiert, bis eine homogene Paste vorliegt.

### B Komponente

Als Härter für das Methacrylatharz werden 10 Gew.-% einer 40%-igen Dispersion von Benzoylperoxid in Wasser und 14 Gew.-% entmineralisiertes Wasser vorgelegt und darin 53 Gew.-% eines Quarzsandes mit einer durchschnittlichen Teilchengröße von 40 µm und 22 Gew.-% einer Tonerde mit einer durchschnittlichen Teilchengröße von 0,8 µm dispergiert und mit 1 Gew.-% pyrogener Kieselsäure verdickt.

### Beispiel 2

Ein Reaktionsharzmörtel und ein Härter werden analog Beispiel 1 hergestellt, mit dem Unterschied, dass dem Reaktionsharzmörtel als Inhibitor 0,526 g 4,6-Dimethyl-2-(octyloxy)pyrimidin-5-ol (2) zugegeben werden.

### Beispiel 3

Ein Reaktionsharzmörtel und ein Härter werden analog Beispiel 1 hergestellt, mit dem Unterschied, dass dem Reaktionsharzmörtel als Inhibitor 0,216 g 6-(Methoxy)-2,4-dimethylpyridin-3-ol (3) zugegeben werden.

### Vergleichsbeispiel 1

Als Vergleich werden ein Reaktionsharzmörtel und ein Härter gemäß den obigen Beispielen hergestellt, mit dem Unterschied, dass dem Reaktionsharzmörtel als Inhibitor 0,123 g 4-*tert-*Butylkatechol zugegeben werden.

### Vergleichsbeispiel 2

Als Vergleich werden ferner ein Reaktionsharzmörtel und ein Härter gemäß den obigen Beispielen hergestellt, mit dem Unterschied, dass dem Reaktionsharzmörtel als Inhibitor 0,205 g 3,5-Di-*tert*-butyl-4-hydroxytoluol (BHT) zugegeben werden.

### a) Bestimmung der Gelzeit

Die Bestimmung der Gelzeit der gemäß den Beispielen und Vergleichsbeispielen hergestellten Mörtelmassen erfolgt mit einer handelsüblichen Vorrichtung (GELNORM®-Gel Timer) bei einer Temperatur von 25°C. Hierzu werden jeweils die A und die B Komponente im Volumenverhältnis 3:1 gemischt und unmittelbar nach dem Mischen im Silikonbad auf 25°C temperiert und die Temperatur der Probe gemessen. Die Probe selbst befindet sich dabei in einem Reagenzglas, das in einen im Silikonbad versenkten Luftmantel zur Temperierung gesetzt wird.

Die Wärmeentwicklung der Probe wird gegen die Zeit aufgetragen. Die Auswertung erfolgt gemäß DIN16945, Blatt 1 und DIN 16916. Die Gelzeit ist die Zeit, bei der ein Temperaturanstieg um 10K erreicht wird, hiervon 25°C nach 35°C.

**Tabelle 1: Ergebnisse der Bestimmung der Gelzeit**

| Inhibitor | Menge Inhibitor [Gew.-%]^{a} | Gelzeit (25°C → 35°C) [min] |
|---|---|---|
| 1 | 0,218 | 5,0 |
| 2 | 0,329 | 6,0 |
| 3 | 0,135 | 4,7 |
| 4-*tert*-Butylkatechol | 0,077 | 6,2 |
| BHT | 0,128 | 5,9 |

| | | |
|---|---|---|
| ^{a}: bezogen auf bezogen auf die A Komponente | | |

Hieraus wird deutlich, dass die Gelzeit der mit den Inhibitoren 1, 2 und 3 eingestellten erfindungsgemäßen Mörtelmassen bei Raumtemperatur im Bereich der mit den aus dem Stand der Technik bekannten Inhibitoren eingestellten Mörtelmassen liegen.

### b) Bestimmung der Lastwerte

Zur Bestimmung der Lastwerte der ausgehärteten Mörtelmasse verwendet man eine Ankergewindestange M12, die in ein Bohrloch in Beton mit einem Durchmesser von 14 mm und einer Bohrlochtiefe von 72 mm mit dem erfindungsgemässen Zweikomponenten-Reaktionsharz eingedübelt wird. Man ermittelt die mittlere Versagenslast durch zentrisches Ausziehen der Ankergewindestange mit enger Abstützung unter Verwendung hochfester Ankergewindestangen. Es werden jeweils 3 Ankergewindestangen eingedübelt und nach 24 Stunden Aushärtung ihre Lastwerte bestimmt. Die hierbei ermittelten Lastwerte sind als Mittelwert in der nachfolgenden Tabelle 1 ebenfalls aufgeführt.

**Tabelle 2: Ergebnisse der Bestimmung der Lastwerte**

| Inhibitor | Referenz ¹ [N/mm²] | F1b ² [N/mm²] | -5°C ³ [N/mm²] | -10°C ³ [N/mm²] | +40°C ³ [N/mm²] |
|---|---|---|---|---|---|
| 1 | 24,2 ± 1,8 | 25,0 ± 1,0 | 23,2 ± 1,0 | 21,9 ± 0,8 | 21,9 ± 0,2 |
| 2 | 22,0 ± 1,0 | 22,9 ± 0,8 | 21,1 ± 0,2 | 17,1 ± 0,2 | 21,5 ± 1,5 |
| 3 | 24,4 ± 1,0 | 25,9 ± 0,4 | 22,6 ± 1,7 | 19,4 ± 0,7 | 23,0 ± 0,1 |
| 4-*tert-*Butylkatechol | 23,5 ± 0,9 | 24,3 ± 0,3 | 26,3 ± 0,6 | 24,8 ± 1,3 | 21,7 ± 0,6 |
| BHT | 25,6 ± 0,6 | 24,5 ± 0,2 | 22,0 ± 0,7 | 21,6 ± 0,8 | 23,8 ± 1,1 |

| | | | | | |
|---|---|---|---|---|---|
| ¹. trockenes gereinigtes Bohrloch, Setzen und Aushärten bei Raumtemperatur ²: halbgereinigtes Bohrloch in wassergesättigtem Beton, Setzen und Aushärten bei Raumtemperatur ³: wie 1, aber Setzen und Aushärten bei -5°C, -10°C und +40°C | | | | | |

Wie aus obiger Tabelle 2 ersichtlich ist, zeigen die erfindungsgemäß mit den Inhibitoren 1, 2 und 3 eingestellten Mörtelmassen bei -10°C, -5°C und +40°C Lastwerte, die im Bereich der mit den bekannten Inhibitoren eingestellten Mörtelmassen erhalten werden, auch bei halbgereinigten und feuchten Bohrlöchern.

### c) Messung der Lagerstabilität des Reaktionsharzmörtels bei +40°C via Gelzeit

Der Reaktionsharzmörtel wird bei +40°C in Kontakt mit Luft gelagert und in zeitlichen Abständen eine Probe zur Bestimmung der Gelzeit entnommen. Die Gelzeit wird jeweils analog a) bestimmt. Die Ergebnisse sind in Tabelle 3 gezeigt.

**Tabelle 3: Ergebnisse der Untersuchung der Lagerstabilität des erfindungsgemäßen Reaktionsharzmörtels mittels Bestimmung der Gelzeit:**

| Inhibitor | Gelzeit (+25°C → +35°C) [min] | | | |
|---|---|---|---|---|
| | frisch hergestellt | nach 3 Wochen | nach 11 Wochen | nach 21 Wochen |
| 1 | 4,1 | 3,4 | 3,1 | 2,6 |
| 2 | 6,0 | 5,9 ⁴ | - | - |
| 3 | 4,7 | 4,3 | 3,8 | 4,5 |

| | | | | |
|---|---|---|---|---|
| ⁴: 10 Tage bei +40°C gelagert | | | | |

Die Gelzeit der A Komponenten, die mit Inhibitoren wie 4-*tert*-Butylkatechol eingestellt wurden, würden nach 21 Wochen bei +40°C deutlich unter 50% der ursprünglichen Gelzeit liegen.

Diese Beispiele belegen die überraschende Tatsache, dass die erfindungsgemässen Reaktionsharzmörtel eine deutlich verbesserte Lagerstabilität und damit einen deutlich reduzierten Gelzeitdrift aufweisen und gegenüber den Vergleichsreaktionsharzmörteln zumindest eine gleichwertige, teilweise sogar bessere Leistung (Lastwerte) aufweisen.

## Patentansprüche

1. Verwendung eines Inhibitors der allgemeinen Formel (I) oder (II) 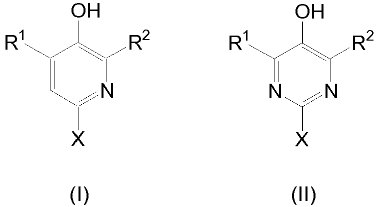 in denen R¹ und R² jeweils unabhängig voneinander Wasserstoff, eine verzweigte oder unverzweigte C₁-C₂₀-Alkylgruppe ist, X eine beliebige elektronenschiebende Gruppe ist, zur Einstellung der Reaktivität und der Gelzeit von Harzmischungen und/oder Reaktionsharzmörteln auf Basis radikalisch härtbarer Verbindungen.

2. Verwendung nach Anspruch 1, wobei in Formel (I) die elektronenschiebende Gruppe X aus der Gruppe bestehend aus -OR³, -NH₂, -NHR³ und -NR³₂ ausgewählt ist, in denen R³ jeweils unabhängig eine verzweigte oder unverzweigte C₁-C₂₀-Alkylgruppe oder eine C₂-C₄-Polyalkylenoxid-Gruppe ist.

3. Verwendung nach Anspruch 2, wobei in Formel (I) R¹ und R² unabhängig voneinander Wasserstoff, eine verzweigte oder unverzweigte C₁-C₈-Alkylgruppe sind.

4. Verwendung nach Anspruch 3, wobei in Formel (I) R¹ und R² unabhängig voneinander Methyl, *iso*-Propyl oder *tert*-Butyl sind.

5. Verwendung nach Anspruch 1, wobei die Verbindung der Formel (I) oder (II) eine Verbindung der Formeln 1, 2 oder 3 ist:

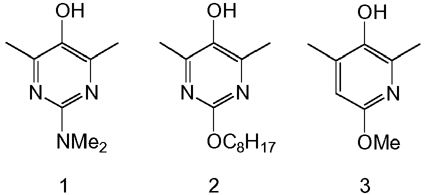

6. Harzmischung umfassend mindestens eine radikalisch polymerisierbare Verbindung, gegebenenfalls einen Reaktivverdünner und ein Mittel zur Einstellung der Reaktivität und der Gelzeit, **dadurch gekennzeichnet, dass** das Mittel zur Einstellung der Reaktivität und der Gelzeit ein Inhibitor der allgemeinen Formel (I) oder (II) ist 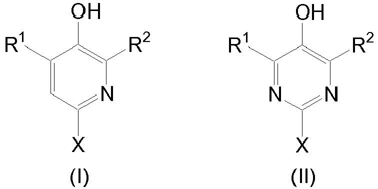 in denen R¹ und R² jeweils unabhängig voneinander Wasserstoff, eine verzweigte oder unverzweigte C₁-C₂₀-Alkylgruppe ist und X eine beliebige elektronenschiebende Gruppe ist.

7. Harzmischung nach Anspruch 6, wobei in Formel (I) die elektronenschiebende Gruppe X aus der Gruppe bestehend aus -OR³, -NH₂, -NR³ und -NR³₂ ausgewählt ist, in denen R³ jeweils unabhängig eine verzweigte oder unverzweigte C₁-C₂₀-Alkylgruppe oder eine C₂-C₄-Polyalkylenoxid-Gruppe ist.

8. Harzmischung nach Anspruch 7, wobei in Formel (I) R¹ und R² unabhängig voneinander Wasserstoff, eine verzweigte oder unverzweigte C₁-C₈-Alkylgruppe sind.

9. Harzmischung nach Anspruch 8, wobei in Formel (I) R¹ und R² unabhängig voneinander Methyl, *iso*-Propyl oder *tert*-Butyl sind.

10. Harzmischung nach Anspruch 6, wobei das Mittel zur Einstellung der Reaktivität und der Gelzeit eine Verbindung der Formeln 1, 2 oder 3 ist:

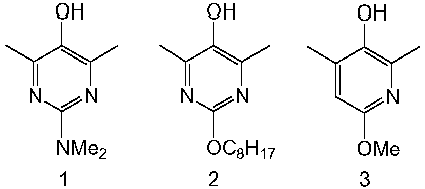

11. Reaktionsharzmörtel, umfassend die Harzmischung nach einem der Ansprüche 6 bis 10 und anorganische Zuschlagstoffe.

12. Zweikomponenten-Mörtelsystem umfassend als A Komponente den Reaktionsharzmörtel nach Anspruch 11 und reaktionsinhibierend getrennt angeordnet als B Komponente einen Härter.

13. Zweikomponenten-Mörtelsystem nach Anspruch 12, wobei der Härter ein anorganisches oder organisches Peroxid als Härtungsmittel enthält.

14. Zweikomponenten-Mörtelsystem nach Anspruch 12 oder 13, wobei der Härter ferner anorganische Zuschlagstoffe enthält.

15. Zweikomponenten-Mörtelsystem nach einem der Ansprüche 12 bis 14, wobei die A Komponente neben dem Reaktionsharzmörtel zusätzlich noch eine hydraulisch abbindende oder polykondensierbare anorganische Verbindung und die B Komponente neben dem Härtungsmittel zusätzlich noch Wasser enthält.

16. Verwendung des Zweikomponenten-Mörtelsystems nach einem der Ansprüche 12 bis 15 zur chemischen Befestigung.

17. Patrone, Kartusche oder Folienbeutel, enthaltend eine Zweikomponenten-Mörtelsystem nach einem der Ansprüche 12 bis 15 die zwei oder mehrere voneinander getrennte Kammern umfassen, in welchen der Reaktionsharzmörtel bzw. der Härter angeordnet sind.

## Claims

1. Use of an inhibitor of general formula (I) or (II) 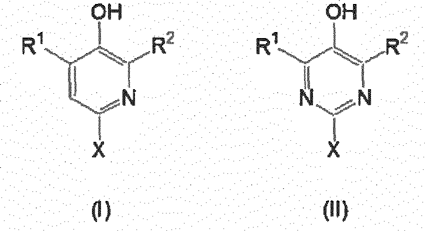 in which R¹ and R² each independently of each other are hydrogen, a branched or unbranched C₁-C₂₀ alkyl group and X is any electron-donating group, for adjusting the reactivity and gel time of resin mixtures and/or reaction resin mortars based on radically hardenable compounds.

2. Use according to claim 1, wherein in formula (I) the electron-donating group X is selected from the group consisting of -OR³, -NH₂, -NHR³ and -NR³₂, in which R³ independently is a branched or unbranched C₁-C₂₀ alkyl group or a C₂-C₄ polyalkylene oxide group.

3. Use according to claim 2, wherein in formula (I) R¹ and R² independently of each other are hydrogen, a branched or unbranched C₁-C₈ alkyl group.

4. Use according to claim 3, wherein in formula (I) R¹ and R² independently of each other are methyl, *iso*-propyl or *tert*-butyl.

5. Use according to claim 1, wherein the compound of formula (I) or (II) is a compound of formulas 1, 2 or 3:

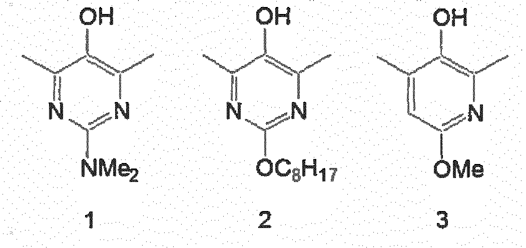

6. Resin mixture comprising at least one radically polymerisable compound, if necessary a reactive thinner and an agent for adjusting reactvity and gel time, **characterised in that** the agent for adjusting reactivity and gel time is an inhibitor of general formula (I) or (II) 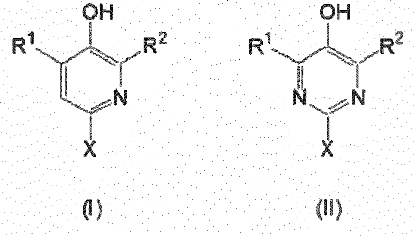 in which R¹ and R² each independently of each other are hydrogen, a branched or unbranched C₁-C₂₀ alkyl group and X is any electron-donating group.

7. Resin mixture according to claim 6, wherein in formula (I) the electron-donating group X is selected from the group consisting of -OR³, -NH₂, -NR³ and -NR³₂, in which R³ independently is a branched or unbranched C₁-C₂₀ alkyl group or a C₂-C₄ polyalkylene oxide group.

8. Resin mixture according to claim 7, wherein in formula (I) R¹ and R² independently of each other are hydrogen, a branched or unbranched C₁-C₈ alkyl group.

9. Resin mixture according to claim 8, wherein in formula (I) R¹ and R² independently of each other are methyl, *iso*-propyl or *tert*-butyl.

10. Resin mixture according to claim 6, in wherein the agent for adjusting reactivity and gel time is a compound of formulas 1, 2 or 3:

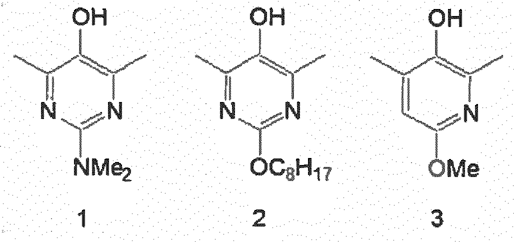

11. Reaction resin mortar, comprising the resin mixture according to one of claims 6 to 10 and inorganic additives.

12. Two-component mortar system comprising the reaction resin mortar according to claim 11 as A component and a hardener as B component arranged separated in a way that inhibits reaction.

13. Two-component mortar system according to claim 12, wherein the hardener contains an inorganic or organic peroxide as hardening agent.

14. Two-component mortar system according to claim 12 or 13, wherein the hardener also contains inorganic additives.

15. Two-component mortar system according to one of claims 12 to 14, wherein apart from the reaction resin mortar the A component also contains a hydraulic-setting or polycondensable inorganic compound and apart from the hardening agent the B component also contains water.

16. Use of the two-component mortar system according to one of claims 12 to 15 for chemical fixing.

17. Cartridges or foil bags containing a two-component mortar system according to one of claims 12 to 15, which comprise two or more chambers separated from each other, in which the reaction resin mortar or hardener are arranged.

## Revendications

1. Utilisation d'un inhibiteur de formule générale (I) ou (II) 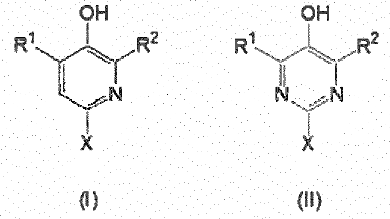 dans lesquelles R¹ et R² représentent chacun indépendamment des autres un atome d'hydrogène, un groupe alkyle en C₁-C₂₀ à chaîne droite ou ramifiée, X est un groupe quelconque donneur d'électrons, pour ajuster la réactivité et le temps de gélification de mélanges de résines et/ou de mortiers à base d'une résine de réaction à base de composés à durcissement radicalaire.

2. Utilisation selon la revendication 1, pour laquelle, dans 1a formule (I), le groupe donneur d'électrons X est choisi dans le groupe consistant en -OR³, -NH₂, -NHR³ et -NR³₂, dans lesquels chaque R³ représente d'une manière indépendante un groupe alkyle en C₁-C₂₀ à chaîne droite ou ramifiée ou un groupe poly(oxyalkylène) en C₂-C₄.

3. Utilisation selon la revendication 2, pour laquelle, dans la formule (I), R¹ et R² représentent chacun indépendamment de l'autre un atome d'hydrogène, un groupe alkyle en C₁-C₈ à chaîne droite ou ramifiée.

4. Utilisation selon la revendication 3, pour laquelle, dans la formule (I), R¹ et R² représentent chacun indépendamment de l'autre un groupe méthyle, *iso*-propyle ou *tert*-butyle.

5. Utilisation selon la revendication 1, pour laquelle le composé de formule (I) ou (II) est un composé de formule 1, 2 ou 3

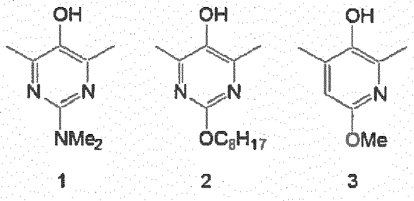

6. Mélange de résines comprenant au moins un composé polymérisable par polymérisation radicalaire, éventuellement un diluant réactif et un agent pour ajuster la réactivité et le temps de gélification, **caractérisé en ce que** l'agent pour ajuster la réactivité et le temps de gélification est un inhibiteur de formule générale (I) ou (II) 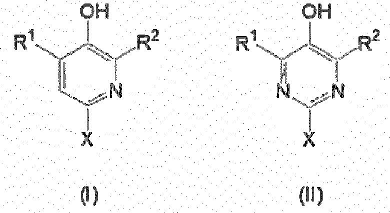 dans lesquels R¹ et R² représentent chacun indépendamment de l'autre un atome d'hydrogène, un groupe alkyle en C₁-C₂₀ à chaîne droite ou ramifiée, et X est un groupe quelconque donneur d'électrons.

7. Mélange de résines selon la revendication 6, dans lequel, dans la formule (I), le groupe donneur d'électrons X est choisi dans le groupe consistant en -OR³, -NH₂, -NHR³ et -NR³₂, dans lesquels chaque R³ représente d'une manière indépendante un groupe alkyle en C₁-C₂₀ à chaîne droite ou ramifiée ou un groupe poly(oxyalkylène) en C₂-C₄.

8. Mélange de résines selon la revendication 7, dans lequel, dans la formule (I), R¹ et R² représentent chacun indépendamment de l'autre un atome d'hydrogène, un groupe alkyle en C₁-C₈ à chaîne droite ou ramifiée.

9. Mélange de résines selon la revendication 8, dans lequel, dans la formule (I), R¹ et R² représentent chacun indépendamment de l'autre un groupe méthyle, *iso*-propyle ou *tert*-butyle.

10. Mélange de résines selon la revendication 6, dans lequel l'agent pour ajuster la réactivité et le temps de gélification est un composé de formule 1, 2 ou 3:

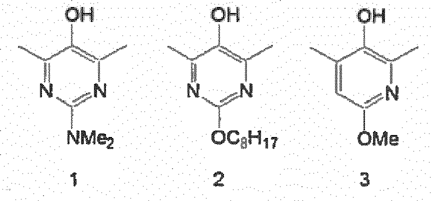

11. Mortier à base de résines de réaction, comprenant le mélange de résines selon l'une des revendications 6 à 10 et des granulats inorganiques.

12. Système de mortier à deux composants, comprenant en tant que Composant A le mortier à base d'une résine de réaction selon la revendication 11 et en tant que Composant B, disposé séparément, avec effet inhibiteur de réaction, un durcisseur.

13. Système de mortier à deux composants selon la revendication 12, dans lequel le durcisseur contient en tant qu'agent de durcissement un peroxyde inorganique ou organique.

14. Système de mortier à deux composants selon la revendication 12 ou 13, dans lequel le mortier contient en outre des granulats inorganiques.

15. Système de mortier à deux composants selon l'une des revendications 12 à 14, dans lequel le Composant A contient encore en outre, en plus du mortier à base d'une résine de réaction, un composé inorganique à prise hydraulique ou polycondensable, et le Composant B contient encore en outre, en plus de l'agent de durcissement, de l'eau.

16. Utilisation du système de mortier à deux composants selon l'une des revendications 12 à 15 pour une consolidation chimique.

17. Cartouche, étui ou sachet, contenant un système de mortier à deux composants selon l'une des revendications 12 à 15, qui comprennent deux ou plusieurs compartiments séparés l'un de l'autre, dans lesquels sont disposés le mortier à base d'une résine de réaction ou le durcisseur.
